**Europäisches Patentamt**

**European Patent Office**

**Office européen des brevets**

(11) Veröffentlichungsnummer: **0 120 986**

**A1**

## (12) EUROPÄISCHE PATENTANMELDUNG

(21) Anmeldenummer: **83103243.8**

(22) Anmeldetag: **31.03.83**

(51) Int. Cl.³: **F 02 B 71/04**
**H 02 K 35/04, H 02 K 7/18**

(43) Veröffentlichungstag der Anmeldung:
**10.10.84 Patentblatt 84/41**

(84) Benannte Vertragsstaaten:
**BE CH DE FR GB IT LI SE**

(71) Anmelder: **Z U V "PROGRESS"**
**Boul. Lenin 125, Block 2**
**Sofia(BG)**

(72) Erfinder: **Iliev, Maxim Dimitrov, Dipl.-Ing.**
**Boul. E. Georgiev 120**
**Sofia(BG)**

(72) Erfinder: **Kervanbaschiev, Stoju Stoev, Dipl.-Ing.**
**Boul. Ml. Prochod, 6-2**
**Sofia(BG)**

(72) Erfinder: **Karamanski, Stefan Dimitrov, Dipl.-Ing.**
**Pando Tipov-Strasse Block 309-3**
**Sofia(BG)**

(72) Erfinder: **Makedonski, Frederik Maximov, Dipl.-Ing.**
**Vl. Poptomov-Strasse 7**
**Sofia(BG)**

(74) Vertreter: **Finck, Dieter et al,**
**Patentanwälte v. Füner, Ebbinghaus, Finck Mariahilfplatz 2 & 3**
**D-8000 München 90(DE)**

(54) **Verfahren für die Stromerzeugung bei einem zyklischen Verbrennungsprozess.**

(57) Bei dem Verfahren für eine Stromerzeugung bei einem zyklischen Verbrennungsprozess, bei dem mechanische geradlinige hin- und hergehende Bewegungen eines aus zwei nicht trennbar gekoppelten Kolben in zwei gegenüberliegenden Brennkammern bestehenden Kolbensystems hervorgerufen werden, wobei in den Brennkammern zeitlich aufeinanderfolgend und sich zyklisch wiederholend ein durch einen elektrischen Funken eingeleiteter Verbrennungsvorgang abläuft, und die kinetische Energie der hin- und hergehenden Bewegungen der beweglichen Teile in elektrische Energie umgewandelt wird, soll der Ablauf bei höheren Kolbengeschwindigkeiten und höherem Druck ermöglicht werden, um das Anfahren zu erleichtern und um heizwertärmere Brennstoffe verwenden zu können. Dies wird dadurch erreicht, daß der Verbrennungsprozess bei einer niedrigen Verdichtungsstufe beginnt, die für die Erstzündung des Brennstoff-Luftgemisches bei dem Auslösen eines elektrischen Funkens ausreicht, bei einem sich vermindernden Volumen unter der Einwirkung der Kräfte der gegenüberliegenden Brennkammer abläuft und bei einem sich erweiternden Volumen beim Rückgang des Kolbens abgeschlossen wird, wobei eine elektromotorische Spannung in einer an den nicht trennbar gekoppelten Kolben feststehend angebrachten Spule induziert wird, die bei ihrer Bewegung die magnetischen Feldlinien eines unbeweglichen Dauermagnetfeldes durchkreuzt.

./...

FIG. 1

## Verfahren für die Stromerzeugung bei einem zyklischen Verbrennungsprozess

Die Erfindung betrifft ein Verfahren für die Stromerzeugung bei einem zyklischen Verbrennungsprozess, bei dem mechanische geradlinige hin- und hergehende Bewegungen eines aus zwei nicht trennbar gekoppelten Kolben in zwei gegenüberliegenden Brennkammern bestehenden Kolbensystems hervorgerufen werden, wobei in den Brennkammern zeitlich aufeinanderfolgend und sich zyklisch wiederholend ein durch einen elektrischen Funken eingeleiteter Brennvorgang abläuft, und die kinetische Energie der hin- und hergehenden Bewegungen der beweglichen Teile in elektrische Energie umgewandelt wird.

Die Erfindung ist für die Stromversorgung stationärer und mobiler Stromverbraucher und insbesondere bei Transportmitteln einsetzbar.

Bekannt sind zyklische Verbrennungsprozesse einsetzende Verfahren, wobei mechanische Schwingungen erzeugt werden, die ihrerseits in elektrische Energie umgewandelt werden.

In der Praxis werden sogenannte Gasgeneratoren verwendet. Es handelt sich dabei um wellenlose Kolben-Verbrennungsmotoren mit hoher Leistung, die Verdichter antreiben. Zur Stromerzeugung wird dann durch den Verdichter eine schnelllaufende, mit einem elektrischen Rotationsgenerator gekoppelte Gasturbine versorgt. Unabhängig vom Prozess, d.h. Diesel- oder Ottoprozess arbeiten diese Motoren mit einem begrenzten Verdichtungsgrad, was einen niedrigen Wirkungsgrad zur Folge hat. Solche Motoren sind nicht mit einem Schwungrad ausgerüstet, sie speichern also die Energie der vorhergehenden Takte für die nachfolgenden Takte nicht und weisen eine niedrige Schwingungsfrequenz in der Größenordnung von 20 Hz auf, ungeachtet der Tatsache, daß sie mit geringen Schwingungsmassen betrieben werden. Das die Energie abführende verdichtete Gas ist praktisch trägheitslos. Die für den Ablauf eines Diesel-Kreisprozesses erforderliche Kompression wird durch zusätzliche Luftpuffer erzeugt. Diese Art von Kolben-Verbrennungsmotoren erfordert zusätzliche Synchronisierungs- und Anfahreinrichtungen.

Bekannt sind zwei direkt gekoppelte Kolbensysteme einsetzende Verfahren. Die Energie wird ebenfalls an einen Verdichter und entsprechend an eine Gasturbine abgegeben. Es handelt sich um Gasgeneratoren, an die eine Wankel-Gasturbine und ein elektrischer Generator angeschlossen sind (GB-C-1440805 und 1444449, DE-C-2456177 und 2607111). Sie weisen eine niedrige Schwingungsgeschwindigkeit und eine trotz Vereinfachung der Synchronisierung, komplizierte Konstruktion auf, haben einen niedrigen Wirkungsgrad und können nur begrenzt eingesetzt werden.

Bekannt sind auch Verfahren für die direkte Stromerzeugung bei einer linearen Schwingbewegung der Kolben in Verbrennungsmotoren. Die Schwinganker der verwendeten elektrischen Generatoren weisen große Masen auf, was eine Verminderung der Schwinggeschwindigkeit zur Folge hat und zu einer weiteren Erhöhung der Ankermassen führt. Diese Rückkopplung ist sehr tiefgreifend.

Bekannt sind weiterhin Lösungen mit zwei gekoppelten und nicht gekoppelten Kolben, die gleichzeitig auch Anker eines linearen elektrischen Generators sind, d.h. Dauermagnete oder Elektromagnete mit Erregerwicklungen (DE-C-2459203 und 205996, US-C-32344395). Diese Lösungen sind nur bei geringen Leistungen einsetzbar, da sie langsamlaufend sind, so daß aus konstruktiven Gründen ihr Einsatz begrenzt ist. Außerdem treten bei den nicht gekoppelten Kolben Probleme der Bewegungssynchronisierung, und bei den gekoppelten Probleme bei der Auswuchtung der Eigenmasse und der Masse der mit ihnen verbundenen Ankern auf. Bei den grundsätzlich langsamlaufenden Vorrichtungen mit gekoppelten Kolben werden komplizierte und schwere Auswuchtvorrichtungen benötigt, die ihrerseits die Schwinggeschwindigkeit weiter senken und nicht vertretbare Reibungsverluste verursachen, wodurch die ursprünglichen Vorteile dieser Lösungen ebenfalls gesenkt werden. In den meisten Fällen ist man gezwungen, wieder ein Schwungrad, wenn auch ohne eine vollständige Leistungsableitung von demselben, zum Anfahren für den kontinuierlichen Betrieb, für das Auswuchten, für die Synchronisierung und die genaue Kontrolle der Totpunkte des Verbrennungsmotors in die Konstruktion einzubeziehen. Auch hier wird ein großer Teil der Energie über den Verdichter und die Gasturbine geleitet (DE-C-2600054).

Bekannt ist ein Verfahren für die Stromerzeugung bei einem zyklischen Verbrennungsprozess (US-C-3766399), bei dem meachnische geradlinige hin- und hergehende Bewegungen eines Kolbensystems bewirkt werden, bestehend aus zwei gegenübergelegene Brennkammern, in denen ein zeitlich aufeinanderfolgender, durch einen elektrischen Funken erregter, sich zyklisch wiederholender Brennvorgang abläuft. Die kinetische Energie der hin- und hergehenden Bewegungen der beweglichen Teile wird in elektrische Energie umgewandelt. Der Brennvorgang ist ein Otto- oder Dieselprozess und verläuft nach einem vorgegebenen Kreisprozess, wobei bei jedem Brennzyklus eine entsprechendelineare Bewegung der beweglichen Massen bewirkt wird. Ein Teil der Energie der linearen Bewegung wird durch einen Lineargenerator, dessen Anker als am Kolbensystem starr befestigt und sich mit demselben fortbewegend ausgeführt ist in elektrische Energie umgewandelt. Die am Ende eines jeden Hubs nicht ausgenützte kinetische Energie wird in durch die Bewegung der Kolben zusammengedrückten Federn gespeicherte potentielle Energie umgewandelt. Die auf diese Weise in den Federn gespeicherte Energie ruft bis zum Zeitpunkt, in dem ein neuer entgegengesetzter Brennvorgang nicht eintritt, abklingende hin- und hergehende Bewegungen hervor. Im günstigsten Fall verläuft der Brennvorgang in jeder Kammer in vier Takten. Das bedeutet, daß auf jeden Arbeitstakt mindestens drei Leertakte folgen. Das Abklingen wächst mit der Erhöhung der Belastung des Lineargenerators an. Die Schwingungsfrequenz wird durch die mechanische Resonanz zwischen den aufeinanderfolgenden Arbeitshüben des Kolbensystems und der Eigenfrequenz der Federn bestimmt.

Nachteilig bei dem Verfahren sind die niedrigen Geschwindigkeiten und Drücke, unter denen der Brennvorgang verläuft, der Einsatz beweglicher Teile, nämlich Induktor, Kolben, Federn und dergleichen, die eine große Masse aufweisen, was eine niedrige Schwingungsfrequenz zur Folge hat. Außerdem ist die Steuerung des Brennvorgangs kompliziert. Eine genaue Kontrolle der Totpunkte kann nicht verwirklicht werden. Das Anfahren des Verbrennungsmotors wird erschwert, sein Einsatz ist begrenzt.

Ein allgemeiner Nachteil aller bekannter Verfahren ist, daß sie den Einsatz hochwertiger und klopffester Brennstoffe erfordern.

Aufgabe der Erfindung ist es, ein Verfahren für die Stromerzeugung bei einem zyklischen Verbrennungsprozess zu schaffen, der bei wesentlich höheren Kolbengeschwindigkeiten und unter höherem Druck verläuft, wobei bewegliche Teile mit geringen Massen und bei wesentlich höherer Schwingungsfrequenz zum Einsatz kommen, so daß auch heizwertarme und niedrigoktanige Brennstoffe verwendet werden können, das eine vereinfachte Steuerung des Verbrennungsprozesses aufweist und bei dem das Anfahren durch einen stabilen Betrieb vereinfacht und die Einsatzfähigkeit des gesamten Systems Motor-Generator verbessert ist.

Erfindungsgemäß wird diese Aufgabe bei dem Verfahren für die Stromerzeugung bei einem zyklischen Verbrennungsprozess der eingangs genannten Art dadurch gelöst, daß er in jeder Brennkammer bei einer niedrigen Verdichtungsstufe beginnt, die für die Erstzündung des Brennstoff-Luftgemisches bei der Zündung durch einen elektrischen Funken ausreicht, bei einem durch die Einwirkung der in der gegenüberliegenden Kammer erzeugten Kräfte sich verminderndem Volumen abläuft, und bei einem sich beim Rückgang der Kolben erweiterndem Volumen abgeschlossen wird, wobei eine elektromotorische Spannung in einer am Kolbensystem feststehend angebrachter Spule induziert wird, die bei ihrer Bewegung die magnetischen Feldlinien eines unbeweglichen Dauermagnetfelds durchkreuzt.

Durch den Einsatz der Spule als Antrieb besteht die Möglichkeit, das Kolbensystem beim Anfahren in Schwingungsbewegungen zu setzen.

Bei einer Verminderung der Schwingungsgeschwindigkeit des Kolbensystems wird die Spule zweckmäßigerweise automatisch von Generator- auf Motorbetrieb, und bei einer Wiederherstellung der normalen Betriebsbedingungen von Motor- auf Generatorbetrieb umgeschaltet.

Die Schwingungsgeschwindigkeit des Kolbensystems wird

vorteilhafterweise durch ein Ausgleichen der ein- und abgeführten Leistung vorgegeben und konstant gehalten.

Das erfindungsgemäße Verfahren hat den Vorteil, daß ein Betrieb mit hoher Frequenz des Kolbensystems - auch über 125 Hz, möglich ist, wobei Frenquenzen in der Größenordnung von 300 Hz bei normalem Kolbenhub erreicht werden können - und zwar bei hohen linearen Geschwindigkeiten von ca. 20 m/s, was mit der Geschwindigkeit der Flammenausbreitung in den Brennkammern vergleichbar ist. Außerdem werden am Ende des Kolbenhubs hohe Drücke erzielt, die einen Verdichtungsgrad ergeben, der höher als der für den Dieselprozess charakteristischen ist und in der Größenordnung von über 25 liegt. Das führt zu einem hohen thermischen Wirkungsgrad. Durch die hohe lineare Geschwindigkeit der Schwingungen werden die Verluste aufgrund der Abkühlung durch die Zylinderwände gesenkt. Das Zünden bei niedrigen Verdichtungsstufen und das Brennen bei sich verminderndem Volumen verlängern die Brennzeit und gewähren ein vollständigeres Verbrennen des Brennstoffs. Aus diesem Grund kann der Brennvorgang auch mit minderwertigem, nicht klopffestem und hochexplosivem Brennstoff ohne die Gefahr eines Klopfbrennens durchgeführt werden. Der am Ende des Kolbenhubs erreichte hohe Druck, und zwar zu der Zeit, in der der größte Teil des Brennstoffs schon verbrannt ist, führt zu einer Minderung des Anteils an schädlichen und giftigen Komponenten in den Abfallprodukten des Brennvorgangs. Die erzeugte elektrische Energie hat eine verhältnismäßig hohe Spannung, und die hohe lineare Bewegungsgeschwindigkeit führt zu einem hohen Wirkungsgrad auch bei der Stromerzeugung selbst, wobei das System Motor-Generator eine geringe spezifische Masse aufweist.

Anhand der beiliegenden Zeichnungen wird ein Ausführungsbeispiel der Erfindung näher erläutert. Es zeigt:

Fig. 1 schematisch eine Vorrichtung für die Stromerzeugung bei einem zyklischen Verbrennungsprozess und

Fig. 2 Amplitudenfrequenzkennlinie der Vorrichtung im Betrieb.

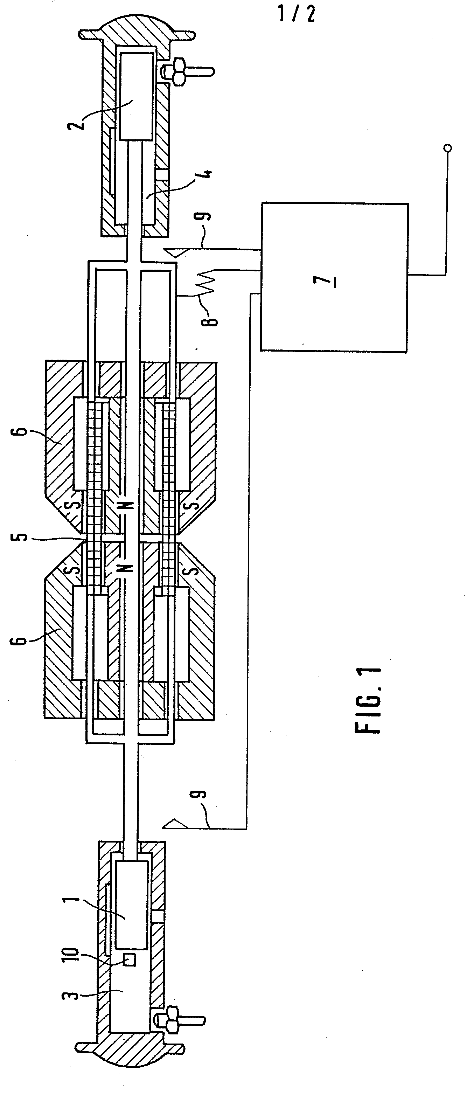

Die in Fig. 1 gezeigte Vorrichtung zur Durchführung des Verfahrens hat ein Kolbensystem, bestehend aus zwei nicht trennbar gekoppelten Kolben 1 und 2, die sich in zwei gegenüberliegenden Brennkammern 3 und 4 bewegen und eine Spule 5, die am Kolbensystem 1, 2 feststehend angebracht ist. Die Spule 5 liegt im Feld eines Dauermagneten 6. Die Vorrichtung wird durch eine Steuereinheit 7 gesteuert und arbeitet folgendermaßen:

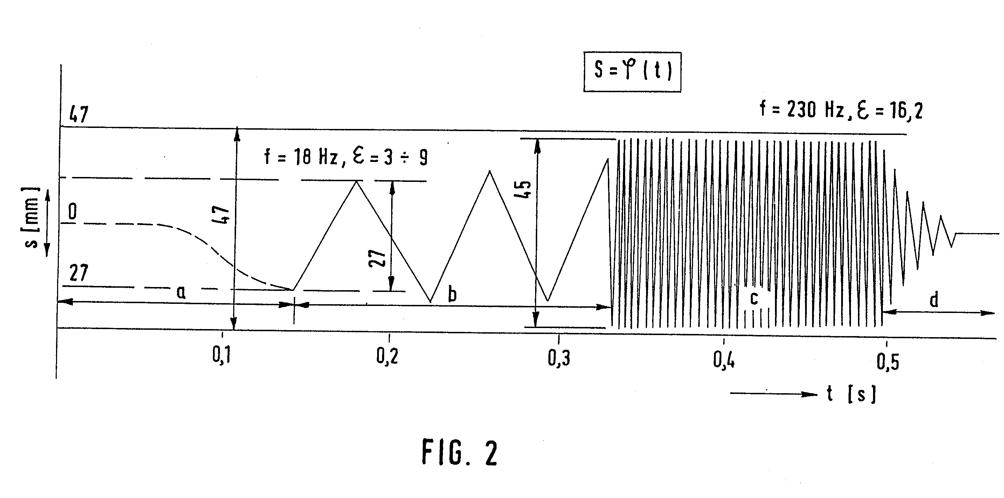

Das Anfahren erfolgt durch einen bei der Betätigung eines in Fig. 1 nicht gezeigten Startdruckknopfes in der Steuereinheit 7 erzeugten und durch flexible Anschlußleitungen in die Spule 5 eingespeisten Stromimpuls. Die Stromstärke wird so gewählt, daß beim Zusammenwirken des Magnetfelds der Dauermagneten 6 mit dem durch diesen Strom in den Leitern der Spule 5 erzeugten Feld, sich elektromagnetische Kräfte entwickeln, die die Bewegung des Kolbensystems 1, 2 nach rechts oder links - in Abhängigkeit von der Polarität des Auslöseimpulses - bewirkt. Die Bewegung ruft eine Verdichtung der sich in der Brennkammer 3 oder 4 befindlichen Luft und eine entsprechende Verdünnung in der gegenüberliegenden Kammer 4, bzw. 3 hervor, wobei der erste Hub, in Fig. 2 mit "a" gekennzeichnet, eine Länge aufweist, die für ein Ansprechen der Geber 9 für die Bewegung nach links oder rechts ausreicht. Es folgen noch mehrere Auslöseimpulse und denselben entsprechende, in Fig. 2 mit "b" gekennzeichnete Hübe, wobei der Energie der verdichteten Luft von den vorhergehenden Hüben auch die Energie der Stromimpulse hinzugefügt wird. Das führt zu einer schnellen Druckerhöhung, womit sich auch die Schwingungsamplituden erhöhen. Wenn in den Hub der Kolben 1 und 2 auch die Ein- und Ablaßöffnungen 10 eingeschlossen werden, erfolgt in der entsprechenden Kammer 3, bzw. 4 ein Ansaugen eines Brennstoff-
Luftgemisches. Die Zündung erfolgt durch einen elektrischen
Funken bei der niedrigsten, für eine Erstzündung des
Brennstoff-Luftgemisches ausreichende Verdichtungsstufe,
die in der Größenordnung von 3 bis 9 abhängig von der
Brennstoffart und -qualität liegt. Die Verbrennung in jeder
Brennkammer 3 bzw. 4 verläuft bei sich verminderndem Volumen unter der Einwirkung der in der gegenüberliegenden Brennkammer, bzw. 4 oder 3 erzeugten Kräfte und der elektromotorischen Kraft der Spule 5. Am Ende des Hubs der Kolben
1 und 2 kommen hohe Drücke in der Größenordnung von über
100 bar und hohe Verdichtungsverhältnisse in der Größenordnung von über 25 zustande, die jedoch aufgrund der
großen Vorzündung kein Klopfbrennen zur Folge haben. Am
Hubende verändert das Kolbensystem 1, 2 seine Bewegungsrichtung, und der Brennvorgang wird endgültig bei sich
erweitertem Volumen abgeschlossen.

Nach der Erstzündung wächst die Geschwindigkeit des Kolbensystems 1, 2 nicht nur als Mittelwert schnell an. Sie
bleibt konstant oder annähernd konstant und zwar während
des gesamten Hubs der Kolben 1 und 2 bis zu den Endpunkten
und zurück (Fig. 2). Die Erhöhung der Schwingungsgeschwindigkeit führt zu einem entsprechenden Anwachsen der elektromotorischen Gegenkraft in der Spule 5 und zu einer allmählichen Verminderung der Stromstärke. Nachdem die Stromstärke den Nullwert erreicht, ändert der Strom seine Richtung und die Spule 5 wird von der Steuereinheit 7 auf
Generatorbetrieb umgeschaltet.

Verfahrensgemäß wächst die Belastung des Generators 5, 6
allmählich und erreicht ihren Nennwert bei einer vorgewählten, einer bestimmten erzeugten Spannung entsprechenden
Schwingungsgeschwindigkeit. Während des Erreichens des Nennwerts der Generatorleistung wird das Kolbensystem vorwiegend aufgrund des Anwachsens der reaktiven Verdichtungsleistung beschleunigt. Die konstanten Betriebsbedingungen treten ein, wenn die abgeleitete elektrische Energie den Wert der beim Verbrennungsprozess erreichten kinetischen Energie und die Schwingungsgeschwindigkeit den vorgewählten Wert erreicht. Die erzeugte elektrische Spannung weist eine Frequenz auf, die der Schwingungsfrequenz der Spule 5 gleich ist. Durch die hohe Schwingungsfrequenz der Spule 5, die eine geringe Eigenmasse aufweist, wird eine Erhöhung der elektrischen Verluste beim Auftreten harmonischer Frequenzen vermieden. Sollten aus irgendeinem Grund, z.B. bei Störungen im Verbrennungsprozess oder Überlastungen, die Schwingungsgeschwindigkeit unter einer bestimmten Grenze fallen, werden von der Steuereinheit 7 erneut Impulse erzeugt und die Spule 5 schaltet sich zeitweilig auf Motorbetrieb um. Das Umschalten der Spule 5 von Motor- auf Generatorbetrieb und umgekehrt, sowie das Speichern von Energie von den vorhergehenden Takten für die nachfolgenden stabilisiert die Frequenz und spielt die Rolle eines Schwungrads ohne Masse.

Das Abschalten der Vorrichtung erfolgt am sichersten durch ein Unterbrechen der Brennstoffzufuhr.

Die Amplitudenfrequenzkennlinie $S = \Psi(t)$ eines nach dem Verfahren arbeitenden Umwandlers ist in Fig. 2 dargestellt. Mit "a" sind das erste Viertel der Schwingungswelle beim Anfahren, mit "b" das weitere Versetzen in Schwingungsbewegungen bis zum Zeitpunkt des Beginns des Verbrennungsprozesses, mit "c" die konstanten Betriebsbedingungen und mit "d" das Abschalten mit abklingenden Schwingungen, verursacht durch die gespeicherte Verdichtungsenergie, bezeichnet. Deutlich bemerkbar ist der konstante absolute Wert der Geschwindigkeit mit der schroffen Richtungsänderung in den Endpunkten.

Der Versuchsumwandler ist dermaßen konstruiert, daß die Enddrücke die Grenzmöglichkeiten des Verfahrens nicht erreichen. Trotzdem ist am Oszillogramm von Fig. 2 ein Prozess abzulesen, bei dem eine Frequenz $f = 230$ Hz, eine Amplitude 45 mm und ein Verdichtungsgrad $\mathcal{E} = 16,2$ erreicht werden. Bei einem konventionellen Kurbelgetrieberotationsumwandler entsprechen diese Daten 13 800 U/min.

Patentansprüche

1. Verfahren für die Stromerzeugung bei einem zyklischen Verbrennungsprozess, bei dem mechanische geradlinige hin- und hergehende Bewegungen eines aus zwei nicht trennbar gekoppelten Kolben in zwei gegenüberliegenden Brennkammern bestehenden Kolbensystems hervorgerufen werden, wobei in den Brennkammern zeitlich aufeinanderfolgend und sich zyklisch wiederholend ein durch einen elektrischen Funken eingeleiteter Brennvorgang abläuft, und die kinetische Energie der hin- und hergehenden Bewegungen der beweglichen Teile in elektrische Energie umgewandelt wird, dadurch g e k e n n z e i c h n e t, daß der Verbrennungsprozess bei einer niedrigen Verdichtungsstufe beginnt, die für die Erstzündung des Brennstoff- Luftgemisches bei dem Auslösen eines elektrischen Funkens ausreicht, bei einem sich vermindernderm Volumen unter der Einwirkung der Kräfte der gegenüberliegenden Brennkammer abläuft und bei einem sich erweiterndem Volumen beim Rückgang des Kolbens abgeschlossen wird, wobei eine elektromotorische Spannung in einer an den nicht trennbar gekoppelten Kolben feststehend angebrachten Spule induziert wird, die bei ihrer Bewegung die magnetischen Feldlinien eines unbeweglichen Dauermagnetfelds durchkreuzt.

2. Verfahren nach Anspruch 1, dadurch g e k e n n - z e i c h n e t, daß bei dem Versetzen des Kolbensystems in Schwingungsbewegungen beim Anfahren die Spule auf Motorbetrieb geschaltet wird.

3. Verfahren nach Anspruch 1, dadurch g e k e n n - z e i c h n e t, daß die Spule bei einer Verminderung der Schwingungsgeschwindigkeit des Kolbensystems von Generator- auf Motorbetrieb, und bei dem Wiedererreichen der Betriebsbedingungen von Motor- auf Generatorbetrieb automatisch umgeschaltet wird.

4. Verfahren nach Anspruch 1, dadurch g e k e n n -
z e i c h n e t, daß die Schwingungsgeschwindigkeit des
Kolbensystems durch Ausgleichen der ein- und abgeleiteten
Leistung konstant vorgegeben und aufrechterhalten wird.

FIG.1

FIG. 2

83103243.8
0120986

0120986

Nummer der Anmeldung

EP 83 10 3243

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 355 728 (G. NÖLTNER) <br> * Seite 2, Absätze 1-3 * | 1-4 | F 02 B 71/04 <br> H 02 K 35/04 <br> H 02 K 7/18 |
| A | US-A-3 247 406 (R. TOESCA) <br><br> * Spalte 2, Zeilen 59-67; Spalte 3, Zeilen 9-17 * | | |
| A | DD-A- 30 765 (A. KÖHLER) <br><br> * Gesamte Schrift * | | |
| A | DE-A-2 654 629 (G. SONTHEIMER) <br><br> * Seite 6 * | | |
| E | DE-A-3 139 357 (ZUV PROGRESS) <br> * Gesamte Schrift * | 1-4 | RECHERCHIERTE SACHGEBIETE (Int. Cl. ³) <br><br> F 02 B 71/00 <br> H 02 K 7/00 <br> H 02 K 35/00 <br> H 02 P 9/00 |

Der vorliegende Recherchenbericht wurde für alle Patentansprüche erstellt.

| Recherchenort <br> BERLIN | Abschlußdatum der Recherche <br> 17-11-1983 | Prüfer <br> GESSNER E A F |
|---|---|---|

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82